# EUROPEAN PATENT APPLICATION

(11) **EP 4 541 472 A1**
(43) Date of publication of application: **23.04.2025**
(21) Application number: 24180371.7
(22) Date of filing: 06.06.2024
(51) Int. Cl.: B21D 13/04, H01M 4/04, H01M 4/139, H01M 10/04

(54) **ELECTRODE PLATE FOR RECHARGEABLE BATTERY, MANUFACTURING APPARATUS THEREOF AND MANUFACTURING METHOD THEREOF**

(30) Priority: 19.10.2023 KR 20230140663
(71) Applicant: Samsung SDI Co., Ltd., Yongin-si, Gyeonggi-do 17084 (KR)
(72) Inventor: BAE, Tae-Hwan, 17084 Yongin-si (KR); KI, Daewook, 17084 Yongin-si (KR)
(74) Representative: Marks & Clerk LLP

(57) **Abstract**

An electrode plate manufacturing apparatus for a secondary battery includes a supply reel configured to supply a substrate, the substrate having a first surface that is uncoated and a second surface that is at least partially coated, and a patterner adjacent to the supply reel, the patterner including a polygon roller and a support roller facing each other, the patterner being configured to pattern the substrate passing between the polygon roller and the support roller, and the polygon roller including convex curved portions that extend in an axial direction of the polygon roller and that are arranged in a circumferential direction of the polygon roller.

## Description

### BACKGROUND

### 1. Field

Aspects of embodiments of the present disclosure relate to electrode plate for rechargeable battery, manufacturing apparatus thereof and manufacturing method thereof.

### 2. Description of Related Art

Secondary batteries may be charged and discharged unlike primary batteries that are not rechargeable. Low-capacity secondary batteries may be used for small portable electronic devices such as smartphones, feature phones, laptop computers, digital cameras, and camcorders, and high-capacity secondary batteries may be used for power supplies for motor drive and power storage batteries of hybrid vehicles and electric vehicles. Such secondary batteries each include an electrode assembly including a positive electrode and a negative electrode, a case accommodating the electrode assembly, an electrode terminal connected to the electrode assembly, and so on.

The above information disclosed in this Background section is for enhancement of understanding of the background of the present disclosure, and therefore, it may contain information that does not constitute related (or prior) art.

### SUMMARY

Aspects of embodiments provide an electrode plate manufacturing apparatus for a secondary battery, including a supply reel configured to supply a substrate having a first surface that is uncoated and a second surface of which at least a part is formed with a coating layer, and a pattern forming device configured to form a pattern on the substrate by passing the substrate between a polygon roller on which a plurality of convex curved portions are formed and a support roller while pressurizing the substrate. Herein, the convex curved portions extend in an axial direction of the polygon roller and are arranged in a circumferential direction of the polygon roller.

According to an embodiment, in the electrode plate manufacturing apparatus, each of the convex curved portions that come into contact with the substrate may have a gradient that is continuously formed.

According to an embodiment, in the electrode plate manufacturing apparatus, a cross-section cut in a direction perpendicular to the axial direction of the polygon roller may include a plurality of convex portions respectively corresponding to the convex curved portions. Herein, each of the convex portions may have a distance, which is greater than or equal to 0.4 mm and less than or equal to 1 mm, between an intersection of a tangent line at a start point of each of the convex portions and a circular arc and an intersection of a tangent line at an end point of each of the convex portions and a circular arc. Furthermore, each of the circular arcs may be a virtual arc that passes through a midpoint of one convex portion among the convex portions and midpoints of two convex portions adjacent to the one convex portion.

According to an embodiment, in the electrode plate manufacturing apparatus, the convex curved portions each having a first radius of curvature and a plurality of concave curved portions each having a second radius of curvature may be alternately formed in the polygon roller. Herein, the first radius of curvature may be less than the second radius of curvature.

According to an embodiment, in the electrode plate manufacturing apparatus, the support roller may be positioned on the first surface side of the substrate to support the first surface of the substrate, and the polygon roller may be positioned on the second surface side of the substrate to pressurize the second surface of the substrate.

According to an embodiment, in the electrode plate manufacturing apparatus, the supply reel may supply the substrate such that the first surface of the substrate faces upward and the second surface of the substrate faces downward, and the polygon roller may be positioned on a lower side of the substrate.

According to an embodiment, the electrode plate manufacturing apparatus may further include a first driver configured to lift and lower the polygon roller, and a controller configured to control the first driver such that the polygon roller pressurizes the substrate at a pressure less than a predetermined pressure.

According to an embodiment, the electrode plate manufacturing apparatus may further include a heater provided in front of the pattern forming device to heat the substrate.

According to an embodiment, in the electrode plate manufacturing apparatus, the heater may include a heating roller configured to heat the substrate and at least one guide roller configured to guide the substrate such that the substrate passes through the heating roller by being in close contact with the heating roller.

According to an embodiment, in the electrode plate manufacturing apparatus, the heating roller may be positioned on the second surface side of the substrate to heat the second surface of the substrate, and the at least one guide roller may be positioned on the first surface side of the substrate to support the first surface of the substrate.

According to an embodiment, in the electrode plate manufacturing apparatus, the polygon roller may have a higher hardness than the support roller.

According to an embodiment, in the electrode plate manufacturing apparatus, the support roller may be a sponge roller.

According to an embodiment, the electrode plate manufacturing apparatus may further include a notching device configured to pass through the pattern forming device and punch a tab of the substrate on which a pattern is formed, a cutter configured to cut the substrate on which the tab is formed by passing through the notching device to make an electrode plate, a controller configured to control the notching device and the cutter, and a magazine configured to stack electrode plates made by the cutter.

According to an embodiment, the electrode plate manufacturing apparatus may further include a transfer device configured to vacuum-adsorb the electrode plates made by the cutter and transfer the electrode plates to the magazine.

According to an embodiment, the electrode plate manufacturing apparatus may further include a feeding roller configured to move the substrate in a process direction, a second driver configured to rotate the feeding roller, and a controller configured to control the second driver.

According to an embodiment, in the electrode plate manufacturing apparatus, a length of the polygon roller in the axial direction may be greater than a length of the substrate in a width direction.

According to an embodiment, in the electrode plate manufacturing apparatus, an uneven pattern may be formed by the pattern forming device and extend in a width direction of the substrate to prevent a curl of the substrate.

According to an embodiment, in the electrode plate manufacturing apparatus, an uneven pattern may be formed on the tab by the pattern forming device to prevent a curl of the tab.

Aspects of embodiments also provide an electrode plate manufacturing method for a secondary battery, including supplying a substrate having a first surface that is uncoated and a second surface of which at least a part is formed with a coating layer, and forming a pattern on the substrate by passing the substrate between a polygon roller on which a plurality of convex curved portions are formed and a support roller while pressurizing the substrate. Herein, the convex curved portions extend in an axial direction of the polygon roller and are arranged in a circumferential direction of the polygon roller.

According to an embodiment, an electrode plate for a secondary battery according to another embodiment of the present disclosure may be manufactured by the electrode plate manufacturing method described above.

At least some of the above and other features of the invention are set out in the claims.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a schematic diagram showing an example of an electrode plate manufacturing apparatus according to an embodiment of the present disclosure;
FIG. 2 illustrates a cross-sectional view showing an example of a substrate which is not patterned;
FIG. 3 illustrates an example in which a pattern forming device forms a pattern on a supplied substrate according to an embodiment of the present disclosure;
FIG. 4 illustrates an example in which a substrate changes according to a process of manufacturing an electrode plate by using the electrode plate manufacturing apparatus of FIG. 1;
FIG. 5 illustrates an example of a polygon roller and a cross-section of the polygon roller cut in a direction perpendicular to an axial direction according to an embodiment of the present disclosure;
FIG. 6 illustrates an enlarged view showing a portion of the cross-section of the polygon roller of FIG. 5;
FIG. 7 illustrates examples of comparing electrode plates manufactured under various pressure conditions according to various embodiments of the present disclosure;
FIG. 8 illustrates examples of transferring electrode plates according to an embodiment of the present disclosure;
FIG. 9 illustrates a schematic diagram showing an example of an electrode plate manufacturing apparatus according to another embodiment of the present disclosure; and
FIG. 10 illustrates a flowchart showing an example of an electrode plate manufacturing method according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Some secondary batteries use a half cathode electrode plate on the outside of an electrode assembly to maximize capacity. In manufacturing the half cathode electrode plate, a first surface of a substrate is an uncoated portion, and a second surface is formed with an active material coating layer. After the active material coating layer is formed on the substrate, the electrode plate goes through a press process, and the active material coating layer may be stretched more than the uncoated portion due to a difference in elongation, thereby causing a curl in which the electrode plate is curved toward the uncoated portion. In a case where the electrode plate is curved due to the curl, slip of the electrode plate may occur on a conveyor belt, vacuum errors may occur frequently during conveyance of the adsorbed electrode plate on the conveyor belt, and stack alignment may be misaligned during stacking of electrode plates, thereby decreasing productivity.

In contrast, example embodiments provide an electrode plate manufacturing apparatus for a secondary battery which prevents a curl of an electrode plate, an electrode plate manufacturing method for a secondary battery, and an electrode plate manufactured by the electrode plate manufacturing method.

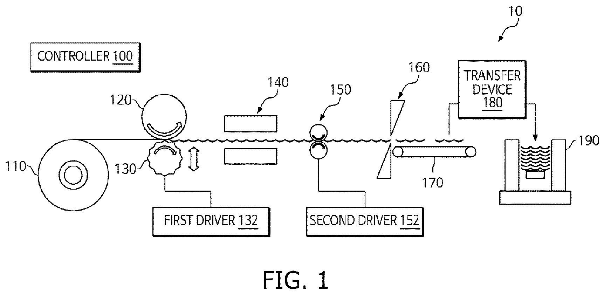

FIG. 1 illustrates a schematic diagram showing an example of an electrode plate manufacturing apparatus 10 according to an embodiment of the present disclosure. As illustrated in FIG. 1, the electrode plate manufacturing apparatus 10 may include a controller 100, a supply reel 110, a pattern forming device (e.g., a patterner), a first driver 132, a notching device 140, a feeding roller 150, a second driver 152, a cutter 160, a conveyor belt 170, a transfer device 180, and a magazine 190.

The supply reel 110 may supply a substrate. Herein, the substrate may be a single-sided substrate. That is, the substrate may be a single-sided substrate having a first surface that is uncoated and a second surface of which at least a part is formed with a coating layer (e.g., an active material coating layer).

According to an embodiment, the substrate may be wound around the supply reel 110 such that the first surface of the substrate (which is uncoated) faces outward (e.g., away from the supply reel 110) and the second surface (of which at least a part is formed with a coating layer) faces inward (e.g., toward the supply reel 110). Further, the supply reel 110 may supply the substrate such that the first surface of the substrate faces upward and the second surface of the substrate faces downward.

The pattern forming device may form a pattern on the substrate by passing the substrate between a support roller 120 and a polygon roller 130 while pressurizing the substrate (e.g., the support roller 120 and the polygon roller 130 may face each other and overlap each other). According to an embodiment, the support roller 120 may be positioned at a first side of the substrate and the polygon roller 130 may be positioned at a second side of the substrate so that the support roller 120 may support the first surface of the substrate and the polygon roller 130 may form a pattern on the second surface of the substrate. For example, the support roller 120 may be positioned on an upper side of the substrate and the polygon roller 130 may be positioned on a lower side of the substrate so that the support roller 120 may support the first surface that is uncoated and the polygon roller 130 may form a pattern on the second surface on which a coating layer is formed.

According to an embodiment, the polygon roller 130 may lift and rotate, and the support roller 120 may pressurize and pass the substrate while rotating. For example, the controller 100 may control the first driver 132 such that the polygon roller 130 may pressurize the substrate at a constant pressure. In detail, the first driver 132 may move (e.g., lift or lower) the polygon roller 130 according to a control signal from the controller 100 such that the substrate may be pressurized at a certain pressure. The polygon roller 130 may pressurize the substrate while rotating in a state of being lifted or lowered by the first driver 132, and the support roller 120 may support the pressurized substrate while rotating. For example, the support roller 120 may be a circular sponge roller.

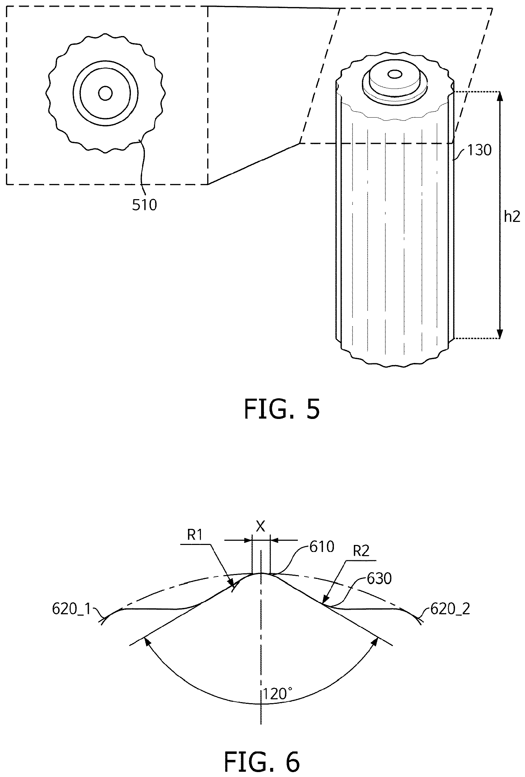

The polygon roller 130 may have a plurality of convex curved portions extending in an axial direction of the polygon roller 130 and arranged in a circumferential direction of the polygon roller 130 (e.g., a plurality of bumps may be arranged along an entire outer circumference of the polygon roller 130). According to an embodiment, each of the convex curved portions formed on the polygon roller 130 may have a continuous curved gradient. That is, each of the convex curved portions formed on the polygon roller 130 may have a smooth curved surface that is not angular (e.g., nonlinear gradient). By pressurizing the convex curved portion having a soft curved surface, a pattern may be formed on the substrate such that the substrate is not torn, and thus, the curl of the substrate may be removed or reduced without damaging the substrate. The detailed form and design of the polygon roller 130 will be described in more detail below with reference to FIGS. 5 and 6.

The notching device 140 punches the substrate such that the substrate patterned by passing through the pattern forming device has a form of an electrode plate. For example, the notching device 140 may punch a first side of the supplied substrate in a width direction such that a tab may be formed on the first side of the supplied substrate in the width direction. Furthermore, the notching device 140 may punch a second side of the supplied substrate in the width direction such that a length of the supplied substrate in the width direction may be constant.

The feeding roller 150 may move the substrate such that the substrate moves in a process direction. According to an embodiment, the feeding roller 150 may include a plurality of rollers. For example, the feeding roller 150 may include a first roller on an upper side of the substrate and a second roller on a lower side of the substrate. The second driver 152 may rotate at least one of the rollers of the feeding roller 150 according to a control signal from the controller 100. As the at least one of the rollers of the feeding roller 150 rotates, the substrate may move in the process direction. Further, at least one of the supply reel 110, the support roller 120, or the polygon roller 130 may be rotated by force with which the substrate moves in the process direction. For example, as illustrated in FIG. 1, the feeding roller 150 may be positioned between the notching device 140 and the cutter 160. In another example, the feeding roller 150 may be positioned at any position between the supply reel 110 and the cutter 160.

As the cutter 160 cuts the substrate on which a tab is formed, an electrode plate may be made. In an embodiment, each substrate cut by the cutter 160 may become a single-sided electrode plate. The controller 100 may control the cutter 160 such that the substrate on which a tab is formed is cut to a predetermined length.

The conveyor belt 170 may convey the made electrode plate to the transfer device 180. Thereafter, the transfer device 180 may vacuum-adsorb the conveyed electrode plate and transfer the electrode plate to the magazine 190. The transferred electrode plates may be stacked in the magazine 190.

According to an embodiment, the curl of the patterned electrode plate may be removed or reduced so that the electrode plate may maintain a flat state, and thus, the electrode plate may be prevented from slipping on the conveyor belt 170. Furthermore, because the electrode plate maintains a flat state, vacuum errors may be prevented from occurring in the transfer device 180, and the alignment quality of electrode plates stacked in the magazine 190 may be increased. Accordingly, the loss in manufacturing secondary batteries may be reduced, and the safety of the secondary batteries may be increased.

According to an embodiment, the controller 100 may control operations of the first driver 132, the second driver 152, the notching device 140, the cutter 160, the conveyor belt 170, and the transfer device 180. For example, cycles, lifting/lowering heights, pressure, and so on, in which the notching device 140 and/or the cutter 160 punches and/or cuts the substrate, may be controlled by the controller 100.

The electrode plate manufactured through the process described above may be included in a secondary battery. According to an embodiment, the single-sided electrode plate manufactured through the process described above may be positioned on an external side (e.g., an uppermost side and a lowermost side) of a stack-type electrode assembly. For example, the stack-type electrode assembly may include a plurality of double-sided electrode plates manufactured by using a double-sided substrate having opposite surfaces on which coating layers are formed, and may further include single-sided electrode plates that are manufactured through the above-described process and respectively provided on the uppermost side and the lowermost side of the electrode assembly. The capacity of the electrode assembly may be increased by the volume of coating layers of the two single-sided electrode plates included in the electrode assembly. Furthermore, by respectively arranging the single-sided electrode plates at the uppermost side and the lowermost side, a total thickness of the electrode assembly may be reduced.

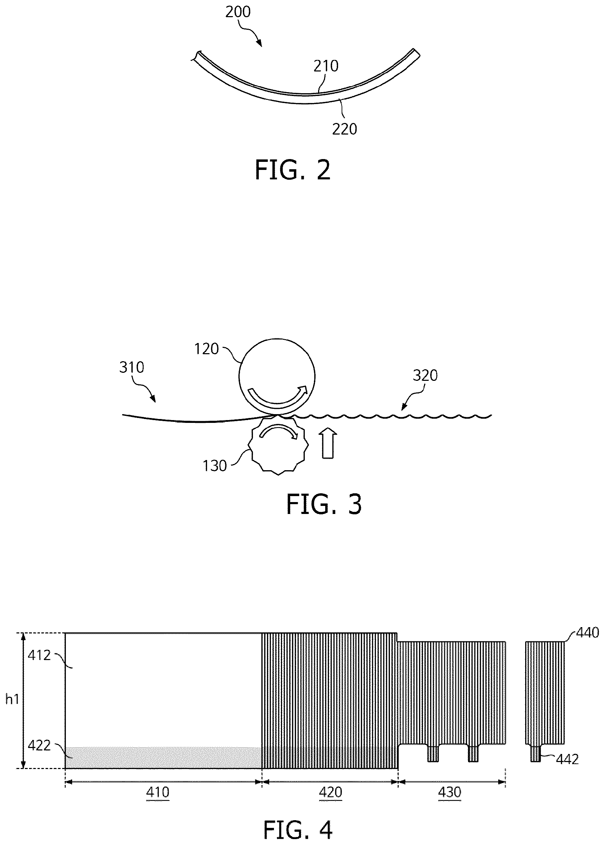

FIG. 2 is a cross-sectional view illustrating an example of a substrate 200 which is not patterned. The illustrated substrate 200 is an example of a substrate before passing through the pattern forming device of FIG. 1 or a substrate that is not patterned and manufactured by an electrode plate manufacturing apparatus without the pattern forming device.

Referring to FIG. 2, the illustrated substrate 200 may be a single-sided substrate having a first surface 210 that is uncoated and a second surface 220 of which at least a part is formed with a coating layer (e.g., an active material coating layer). A substrate having one surface on which a coating layer is formed undergoes a press process, and the second surface 220 on which a coating layer is formed due to a difference in elongation during the press process is stretched more than the first surface 210 that is uncoated. Accordingly, a curl in which the substrate 200 is convexly curved may occur such that the first surface 210 is an inner surface and the second surface 220 is an outer surface. The curl may be more severe as the substrate moves away from a supply reel and may be more severe after the substrate is cut by a cutter.

In a state where the curl occurs, a slip of an electrode plate may occur on a conveyor belt, vacuum errors may occur frequently during conveyance of the adsorbed electrode plate on the conveyor belt, and stack alignment may be misaligned during stacking of electrode plates, and thus, productivity may decrease. In contrast, according to an embodiment, the curl may be prevented or reduced by forming a pattern on a substrate by using the polygon roller 130 of FIG. 1, as will be described in more detail below with reference to FIG. 3.

FIG. 3 is a view illustrating an example in which the pattern forming device of FIG. 1 forms a pattern on a supplied substrate according to an embodiment of the present disclosure. The supplied substrate may be a single-sided substrate having a first surface that is uncoated and a second surface of which at least a part is formed with a coating layer (e.g., an active material coating layer).

Referring to FIG. 3, a substrate 310 before passing through the pattern forming device may have a curl (left side of the support roller 120 and the polygon roller 130 in FIG. 3). As illustrated in FIG. 3, the substrate 310 may be convexly curved such that a first surface (an upper side in FIG. 3) is an inner surface of the curve and is uncoated, and a second surface (a lower side in FIG. 3) is an outer surface of the curve and is coated.

According to example embodiments, the pattern forming device may form a pattern on the substrate 310 by passing the substrate 310 between the support roller 120 and the polygon roller 130 while pressurizing the substrate 310. For example, the support roller 120 may be positioned on a first surface side of the substrate 310, and the polygon roller 130 may be positioned on a second surface side of the substrate 310, so the support roller 120 may support the first surface and the polygon roller 130 may form a pattern on the second surface.

The substrate 310 may be reversely bent by a convex curved portion formed in the polygon roller 130. That is, as the convex curved portion of the polygon roller 130 pressurizes the second surface of the substrate 310, a pattern curved in an opposite direction of the curl may be formed on the substrate 310 to form a patterned substrate 320 after passing through the pattern forming device.

According to an embodiment, the convex curved portion of the polygon roller 130 may extend in an axial direction of the polygon roller 130 and may be positioned in a circumferential direction of the polygon roller 130. In an embodiment, an axis of the polygon roller 130 refers to a rotation axis of the polygon roller 130 (e.g., may extend into the page of FIG. 3) and may be parallel to a width direction of the substrate 310. In this case, the convex curved portion of the polygon roller 130 extending lengthwise in the axial direction of the polygon roller 130 may contact (e.g., directly contact) the second surface of the substrate 310 (e.g., along an entire width of the substrate 310), so a resultant patterned substrate 320 after passing through the pattern forming device may have a pattern elongated in the width direction of the patterned substrate 320.

In addition, the substrate 310 is repeatedly pressurized by a plurality of convex curved portions arranged in the circumferential direction of the polygon roller 130 while the polygon roller 130 rotates, and thereby, the patterned substrate 320 after passing through the pattern forming device may have patterns repeatedly formed at predetermined intervals in a longitudinal direction of the patterned substrate 320 (i.e., along a movement direction of the patterned substrate 320). Accordingly, a curl of the substrate 310 may be removed or reduced after passing through the pattern forming device.

In an embodiment, the polygon roller 130 may have a higher hardness than the support roller 120. For example, the polygon roller 130 may be made of one or more materials including a metal. For example, the polygon roller 130 may be made of a stainless steel material (e.g., SUS 304, or so on) or may further include a metal coating layer (e.g., a titanium coating layer, or so on) including the stainless steel material. In some embodiments, the support roller 120 may be made of, e.g., sponge, silicon, or so on, which has a lower hardness than the polygon roller 130.

FIG. 4 illustrates an example in which a substrate changes according to a process of manufacturing an electrode plate by using the electrode plate manufacturing apparatus of FIG. 1.

Referring to FIG. 4, a first section 410 indicates an example of a substrate before passing through the pattern forming device, but after the substrate is supplied by the supply reel 110. The supplied substrate may be a single-sided substrate having a first surface that is uncoated and a second surface including a first region 412, in which a coating layer is formed, and a second region 422 that is uncoated. Herein, tabs 442 of an electrode plate 440 may be formed in the second region 422 of which opposite surfaces are uncoated. FIG. 4 illustrates a second surface of the substrate.

A second section 420 indicates an example of the substrate after passing through the pattern forming device and before passing through the notching device 140. A pattern extending in a width direction of the substrate may be repeatedly formed on the substrate of the second section 420 in a length direction of the substrate by the polygon roller 130 having a plurality of convex curved portions extending in an axial direction and arranged in a circumferential direction. Accordingly, a curl of the substrate may be removed or reduced.

A third section 430 indicates an example of a substrate after passing through the notching device 140 and before passing through the cutter 160. A first side (the second region 422 side) of the substrate in the width direction may be punched by the notching device 140, and thereby, tabs may be formed on the first side of the substrate (the second region 422 side) in the third section 430. Furthermore, a side of the substrate in the width direction may be punched, and thereby, a length of the substrate in the width direction in the third section 430 may be constant.

An electrode plate 440 may be made by passing and cutting the substrate in the third section 430 where tabs are formed. According to an embodiment, a length h1 (FIG. 4) of the substrate in the width direction may be less than a length h2 (FIG. 5) of the polygon roller 130 in the axial direction, and accordingly, patterns may also be formed in the tabs 442 of the electrode plate 440. The tabs 442 may be maintained flat to prevent sagging of the tabs 442, and the quality of the tabs 442 may be maintained.

FIG. 5 illustrates an example of the polygon roller 130 and a cross-section 510 of the polygon roller 130 cut in a direction perpendicular to the axial direction of the polygon roller 130.

Referring to FIG. 5, according to an embodiment, the polygon roller 130 may be a roller in which a plurality of convex curved portions having a first radius of curvature and a plurality of concave curved portions having a second radius of curvature are formed alternately in a circumferential direction of the polygon roller 130. For example, the polygon roller 130 may include a first convex curved portion, a first concave curved portion, a second convex curved portion, a second concave curved portion, ..., an n^{th} convex curved portion, and an n^{th} concave curved portion which are sequentially formed in the circumferential direction. For example, the first radius of curvature of the convex curved portion may be less than the second radius of curvature of the concave curved portion. In another example, the convex curved portion and the concave curved portion may each have a certain radius of curvature.

The convex curved portions and the concave curved portions formed on the polygon roller 130 may extend in the axial direction of the polygon roller 130. As the curved portions of the polygon roller 130 come into contact with the substrate, an uneven pattern extending in the width direction of the substrate may be formed on the substrate, and thus, a curl of the substrate may be prevented. According to an embodiment, the length h2 of the polygon roller 130 in the axial direction may be greater than the length h1 of the substrate 130 in the width direction. Accordingly, as an uneven pattern may be formed on the entire substrate in the width direction, the uneven pattern may also be formed on a tab. Accordingly, the tab may be prevented from being curled, thereby being maintained flat without sagging. Therefore, the quality of the tabs may be prevented from decreasing during conveyance, and thus, the quality of the tabs may be maintained.

Each of the convex curved portions may be a curved surface having a gradient that is continuously formed. That is, each of the convex curved portions formed on the polygon roller 130 may form a smooth curved surface that is not angular. Accordingly, the polygon roller 130 may form a reverse bending pattern on the substrate in an opposite direction of a curl to prevent the substrate from tearing, and thus, the curl of the substrate may be reduced without damaging the substrate.

The cross-section 510 of the polygon roller 130 cut in a direction perpendicular to the axial direction may include a plurality of convex portions respectively corresponding to the convex curved portions and a plurality of concave portions respectively corresponding to the concave curved portions. Each of the convex portions may have the same radius of curvature (the first radius of curvature) as each of the convex curved portions, and each of the concave portions may have the same radius of curvature (the second radius of curvature) as each of the concave curved portions. A shape of the polygon roller 130 may be determined according to various parameters, and by appropriately designing the shape of the polygon roller 130, a curl of a substrate may be effectively reduced while preventing damage to the substrate. This is described in detail below with reference to FIG. 6.

FIG. 6 illustrates an enlarged view showing a portion of the cross-section of the polygon roller 130 of FIG. 5. As described above, the cross-section of the polygon roller 130 cut in a direction perpendicular to the axial direction may alternatively include the convex portions having the first radius of curvature and the concave portions having the second radius of curvature in a circumferential direction.

Important parameters for determining a shape of the polygon roller 130 may include the number of the convex portions (the number of the convex curved portions), an X value, a first radius of curvature R1 of each of the convex portions, a second radius of curvature R2 of each of the concave portions, an angle of a tangent line of each of the convex portions, and so on.

The number of the convex portions refers to the number of convex portions (convex curved portions) arranged in a circumferential direction of the polygon roller 130, and parameters such as an angle between two adjacent convex portions 610 and 620_1, a pitch indicating a length of the outermost circumference between the two adjacent convex portions 610 and 620_1, and so on may be determined according to the number of convex portions. The number of convex portions may affect an interval between patterns formed on the substrate.

The X value refers to a distance between an intersection of a tangent line at a start point of the convex portion 610 and a circular arc and an intersection of a tangent line at an end point of the convex portion 610 and a circular arc. Herein, the circular arc may be a part of an outermost circumference of the polygon roller and refer to a virtual arc passing through a midpoint of the convex portion 610 and midpoints of two convex portions 620_1 and 620_2 adjacent to the convex portion 610. The X value may affect a length (area) of an operating surface that pressurizes the substrate among the convex curved portions of the polygon roller 130. In a state where the X value is excessively small, there may be damage to the substrate (e.g., a dent), and in a state where the X value is excessively large, a curl of the substrate may not be sufficiently reduced. For example, the polygon roller 130 may have an X value that is greater than or equal to 0.4 mm and less than or equal to 1 mm, e.g., an X value of about 0.6 mm, so a curl of the substrate may be effectively removed or reduced without damaging the substrate. In another example, the X value range may change depending on various factors, e.g., physical properties of the substrate and polygon roller.

The first radius of curvature R1 and the second radius of curvature R2 respectively represent a radius of curvature of the convex portion 610 or 620 and a radius of curvature of a concave portion 630.

An angle of a tangent line of the convex portion refers to an angle between a tangent line at a start point of the convex portion 610 and a tangent line at an end point of the convex portion 610. The angle of the tangent line of the convex portion may affect a depth to which the convex curved portion of the polygon roller pressurizes the substrate. In a state where an operating depth is excessively deep, there may be damage to the substrate, and accordingly, the polygon roller 130 may be designed by using an appropriate angle.

By changing the important parameters for determining a shape of the polygon roller, polygon rollers of types A to E were designed as illustrated in Table 1 below

**Table 1**

| Type | A | B | C | D | E |
|---|---|---|---|---|---|
| Number of convex portions | 20 | 20 | 20 | 20 | 20 |
| Angle between adjacent convex portions | 18° | 18° | 18° | 18° | 18° |
| Pitch (mm) | 3.93 | 3.93 | 3.93 | 3.93 | 3.93 |
| X (mm) | 0.2 | 0.4 | 0.6 | 1 | 2 |
| R1 (mm) | 0.2 | 0.4 | 1 | 1 | 2 |
| R2 (mm) | 1 | 1 | 2 | 1 | 1 |
| Angle of tangent line of convex portion | 120° | 120° | 120° | 120° | 120° |

As a result of performing an experiment to form a pattern on a substrate by using polygon rollers of types A to E, the polygon roller of C type, which has the X value of 0.6 mm, the first radius of curvature R1 of 1 mm, and the second radius of curvature R2 of 2 mm, may most effectively remove the curl of the substrate without damaging the substrate.

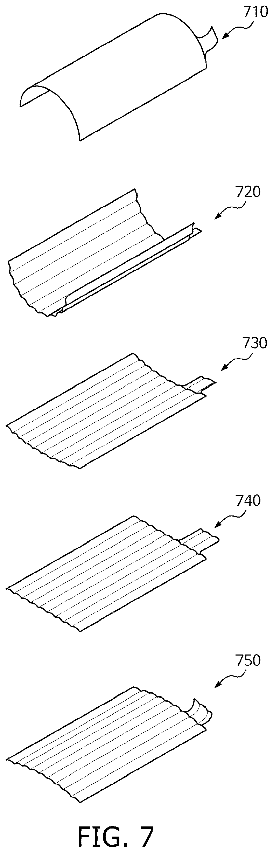

FIG. 7 illustrates examples of comparing electrode plates manufactured under various pressure conditions according to various embodiments of the present disclosure. First, second, third, fourth, and fifth electrode plates 710, 720, 730, 740, and 750 illustrated in FIG. 7 may each have an upper surface of which at least a part (a portion excluding a tab) is formed with a coating layer and a lower surface that is uncoated. The first electrode plate 710 indicates a comparative example of an electrode plate manufactured by an electrode plate manufacturing apparatus without the pattern forming device of the example embodiments.

Referring to FIG. 7, it may be seen that the first electrode plate 710 includes a curl and is curved convexly such that an upper surface (a coating layer) of the electrode plate 710 is an outer surface and a lower surface (an uncoated surface) is an inner surface. In a state where a curl occurs in this way, productivity may decrease due to various problems in a manufacturing process. Furthermore, it may be seen that a tab of the first electrode plate 710 is rolled up. In a state where the tab is not flat in this way, the tab may be damaged during a conveyance process, and thereby, the quality of the tab may be reduced.

The second, third, fourth, and fifth electrode plates 720, 730, 740, and 750 are examples of electrode plates on which patterns are formed and which are manufactured by the electrode plate manufacturing apparatus according to the embodiment of the present disclosure. According to an embodiment, a controller of the electrode plate manufacturing apparatus 10 may control the first driver (e.g., an electropneumatic regulator, or so on) such that the polygon roller 130 pressurizes a substrate at a constant pressure, and the first driver may operate the polygon roller 130 such that the substrate is pressurized at a constant pressure according to a control signal from the controller. As illustrated in FIG. 7, from the second electrode plate 720 toward the fifth electrode plate 750, the polygon roller 130 pressurizes the substrate with less pressure to form patterns. For example, in a case of manufacturing the second, third, fourth, and fifth electrode plates 720, 730, 740, and 750, the pressures with which the polygon roller 130 pressurizes the substrate may be 3 kgf/cm², 1 kgf/cm², 0.7 kgf/cm², and 0.5 kgf/cm², respectively, in this order.

Referring to FIG. 7, it may be seen that a reverse curl occurs in the second electrode plate 720 and the third electrode plate 730 due to excessive reverse bending according to high pressure. It may be seen that the fourth electrode plate 740 maintains flatness by removing a curl due to appropriate pressure, and the tab formed on the fourth electrode plate 740 also maintains flatness. It may be seen that, although an existing curl of the fifth electrode plate 750 has been partially alleviated, it is not completely removed due to small pressure, so the existing curl still remains, and the tab formed on the fifth electrode plate 750 is also rolled up.

Accordingly, as may be seen in FIG. 7 and the above description, a curl may not be removed in a case where the pressure with which the polygon roller pressurizes the substrate is excessively low, and the curl may occur in a reverse direction in a case where the pressure is excessively high. For example, the substrate may have to be pressurized under an appropriate pressure condition, and the curl may be removed or reduced by pressurizing the substrate at a pressure greater than or equal to 0.5 kgf/cm² and less than or equal to 0.8 kgf/cm², e.g., 0.7 kgf/cm². In another example, a pressure range may change depending on various factors, such as physical properties of a substrate and the polygon roller 130.

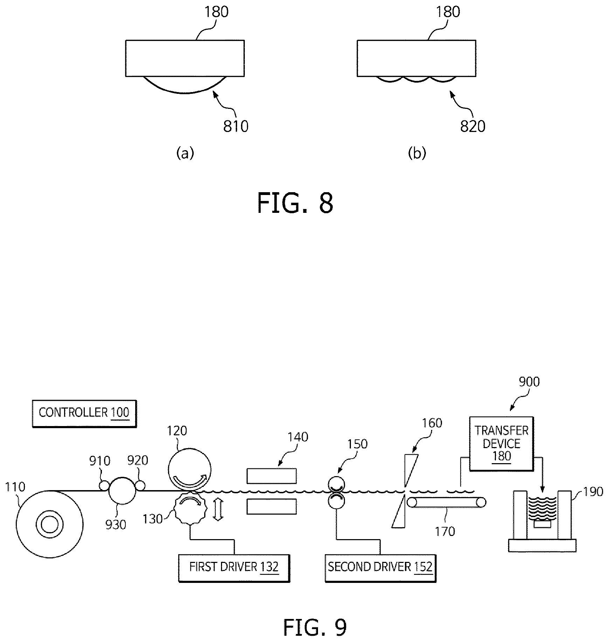

FIG. 8 illustrates examples of transferring electrode plates according to an embodiment of the present disclosure. According to an embodiment, the transfer device 180 may vacuum-adsorb electrode plates and transfer the electrode plates to a magazine where the electrode plates are stacked. According to a first example, as illustrated in part (a) of FIG. 8, a first electrode plate 810, which is manufactured by an electrode plate manufacturing apparatus without the pattern forming device of the example embodiments and has a curl, is transferred by the transfer device 180. According to a second example, as illustrated in part (b) of FIG. 8, a second electrode plate 820, which is manufactured by the electrode plate manufacturing apparatus according to an embodiment of the present disclosure and of which curl is removed or reduced, is transferred by the transfer device 180.

Referring to FIG. 8, in the first example (part (a) of FIG. 8), a vacuum error may frequently occur between the transfer device 180 and the first electrode plate 810 due to a curl of the first electrode plate 810, and accordingly, the transfer device 180 may not smoothly vacuum-adsorb and transfer the electrode plate 810 causing reduction of productivity. In contrast, in the second example (part (b) of FIG. 8), the curl may be removed or reduced in the second electrode plate 820, and accordingly, the frequency of vacuum errors occurring between the transfer device 180 and the second electrode plate 820 may be reduced, and thus, productivity may be increased.

FIG. 9 is a configuration diagram illustrating an example of an electrode plate manufacturing apparatus 900 according to another embodiment of the present disclosure. Referring to FIG. 9, the electrode plate manufacturing apparatus 900 may further include a heater in front of the pattern forming device of the electrode plate manufacturing apparatus. The descriptions made with reference to FIG. 1 may be equally or similarly applied to remaining components of the electrode plate manufacturing apparatus 900 of FIG. 9, except for the heater.

As illustrated in FIG. 9, the heater in the electrode plate manufacturing apparatus 900 may include a heating roller 930 that heats the substrate and first and second guide rollers 910 and 920 that guide the substrate to pass through the heating roller 930 by coming into close contact with the heating roller 930. For example, the first guide roller 910 may be positioned in front of the heating roller 930, and the second guide roller 920 may be positioned behind the heating roller 930. Further, the controller 100 may control a temperature of the heating roller 930.

According to an embodiment, the heating roller 930 may be positioned on a second surface side of a substrate to heat the second surface of the substrate, and the first and second guide rollers 910 and 920 may be positioned on a first surface side of the substrate to support the first surface of the substrate. For example, the substrate may pass through a space between the first guide roller 910 and the heating roller 930 in a state where the first surface of the substrate faces the first guide roller 910 and the second surface faces the heating roller 930. Then, the substrate may pass through a space between the heating roller 930 and the second guide roller 920 in a state where the first surface of the substrate faces the second guide roller 920 and the second surface faces the heating roller 930. Accordingly, the substrate may pass through the heater 930 in a state of being in close contact with the heating roller 930, and as a result, the substrate (that is, the second surface of the substrate of which at least a part is formed with a coating layer) may be heated. As the substrate is heated, ductility of the substrate increases, and thereby, patterns may be better formed by the pattern forming device.

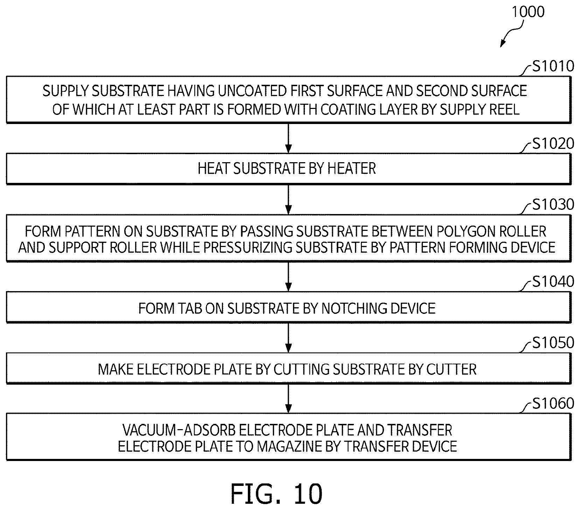

FIG. 10 is a flowchart illustrating an example of an electrode plate manufacturing method 1000 according to an embodiment of the present disclosure. According to an embodiment, the electrode plate manufacturing method 1000 may be performed by an electrode plate manufacturing apparatus (e.g., the electrode plate manufacturing apparatus of FIG. 9 or so on) including a controller, a supply reel, a heater, a pattern forming device, a notching device, a cutter, and a transfer device.

First, the supply reel may supply a substrate having a first surface that is uncoated and a second surface of which at least a part is formed with a coating layer (S1010). For example, the supply reel may supply the substrate such that the first surface of the substrate faces upward and the second surface of the substrate of which at least a part is formed with a coating layer faces downward.

The heater may heat the supplied substrate (S1020). According to an embodiment, the heater may include a heating roller that heats the substrate and at least one guide roller that guides the substrate to pass through the heating roller in a state of being in close contact with the heating roller. For example, the heater may include a heating roller, a first guide roller positioned in front of the heating roller, and a second guide roller behind the heating roller. According to an embodiment, the heating roller may be positioned on a second surface side of the substrate to heat the second surface of the substrate, and the first and second guide rollers may be positioned on a first surface side of the substrate to support the first surface of the substrate. Accordingly, the substrate (that is, the second surface of the substrate of which at least a part is formed with a coating layer) may be heated. As the substrate is heated, ductility of the substrate increases, and thereby, patterns may be better formed by the pattern forming device.

The pattern forming device may form a pattern on the substrate by passing the heated substrate between a polygon roller on which a plurality of convex curved portions are formed and a support roller while pressurizing the substrate (S1030). According to an embodiment, the controller may control a first driver such that the polygon roller pressurizes the substrate at a predetermined pressure, and the first driver may lift and lower the polygon roller according to a control signal from the controller.

According to an embodiment, the support roller may be positioned on the first surface side of the substrate to support the first surface of the substrate, and the polygon roller may be positioned on the second surface side of the substrate to pressurize the second surface of the substrate. Accordingly, the convex curved portions of the polygon roller pressurize the substrate from the second surface of the substrate, and thereby, a pattern may be formed on the substrate such that the substrate is curved in an opposite direction of a curl.

In an embodiment, the polygon roller may have a higher hardness than the support roller. For example, the polygon roller may be made of one or more materials including a metal. For example, the polygon roller may be made of a stainless steel material (e.g., SUS 304, or so on) or may further include a metal coating layer (e.g., a titanium coating layer, or so on) including the stainless steel material. In some embodiments, the support roller 120 may be made of, e.g., sponge, silicon, or so on, which has a lower hardness than the polygon roller 130.

According to an embodiment, the polygon roller may be a roller in which a plurality of convex curved portions having a first radius of curvature and a plurality of concave curved portions having a second radius of curvature are formed alternately. In an embodiment, the first radius of curvature of the convex curved portion may be less than the second radius of curvature of the concave curved portion.

The convex curved portions formed on the polygon roller may extend in an axial direction of the polygon roller and may be arranged in a circumferential direction of the polygon roller. As the curved portions of the polygon roller come into contact with the substrate, an uneven pattern extending in a width direction of the substrate may be formed on the substrate, and thus, a curl of the substrate may be prevented. Herein, each of the convex curved portions may be a curved surface in which the gradient of the curved surface is continuously formed. That is, each of the convex curved portions formed on the polygon roller may have a smooth curved surface that is not angular.

A cross-section cut in a direction perpendicular to the axial direction of the polygon roller may include a plurality of convex portions respectively corresponding to the plurality of convex curved portions. According to an embodiment, the convex portions may each have a distance, which is greater than or equal to 0.4 mm and less than or equal to 1 mm, between an intersection of a tangent line at a start point of the convex portion and a circular arc and an intersection of a tangent line at an end point of the convex portion and a circular arc. Herein, the circular arc may be a virtual arc that passes through a midpoint of the convex portion and midpoints of two convex portions adjacent to the convex portion. As a convex curved portion formed to have a smooth curved surface and appropriately designed pressurizes a substrate, a reverse bending pattern in an opposite direction of a curl may be formed on the substrate to prevent the substrate from tearing, and accordingly, the curl of the substrate may be reduced without damaging the substrate.

According to an embodiment, a length of the polygon roller in an axial direction may be greater than a length of the substrate in a width direction. Accordingly, as an uneven pattern is formed on the substrate in the entire width direction, the uneven pattern may also be formed on a tab. Accordingly, the tab may be prevented from being curled, thereby being maintained flat without sagging. Accordingly, the quality of the tab may be prevented from being decreasing during conveyance, and the quality of the tab may be maintained.

The notching device may punch the tab on which a pattern is formed, and thereby, the tab may be formed (S1040). Furthermore, the cutter may cut the substrate on which the tab is formed to make an electrode plate (S1050). According to an embodiment, the notching device and/or the cutter may lift or lower according to a control signal from the controller. That is, cycles, lifting/lowering heights, pressure, and so on, in which the notching device and/or the cutter punches and/or cuts the substrate, may be controlled by the controller.

The transfer device may vacuum-adsorb the electrode plate and transfer the electrode plate to a magazine (S1060). For example, a conveyor belt may convey the electrode plate to the transfer device, and the transfer device may vacuum-adsorb the conveyed electrode plate and transfer the electrode plate to the magazine. The transferred electrode plates may be stacked in the magazine.

According to an embodiment, the electrode plate manufacturing apparatus may include a feeding roller for moving a substrate in a process direction. For example, the controller may control a second driver, and the second driver may rotate the feeding roller according to a control signal from the controller. As the feeding roller rotates, the substrate may move in the process direction. Furthermore, at least one of the supply reel, the guide roller, the heating roller, the support roller, or the polygon roller may be rotated by the force with which the substrate moves in the process direction.

The flowchart of FIG. 10 and the above description are merely examples of the present disclosure, and the scope of the present disclosure is not limited to the flowchart of FIG. 10 and the above description. For example, one or more steps in the flowchart and the above description may be added, changed, or removed, and a sequence of one or more steps may be changed, and one or more steps may be performed simultaneously.

According to some embodiments of the present disclosure, a pattern curved in an opposite direction of a curl may be formed on an electrode plate, and thus, the curl may be removed or reduced, the electrode plate may maintain a flat state, and slip of the electrode plate on a conveyor belt may be prevented. Furthermore, because the electrode plate maintains a flat state, vacuum errors may be prevented from occurring in a transfer device, and the alignment quality of electrode plates stacked in a magazine may be increased. Accordingly, the loss in manufacturing secondary batteries may be reduced, and the safety of the secondary batteries may be increased.

According to some embodiments of the present disclosure, convex curved portions of a polygon roller are formed as smooth curved surfaces, and a curvature and so on are designed appropriately, and thus, a reverse bending pattern in an opposite direction of a curl may be formed on a substrate to prevent the substrate from tearing. Therefore, a curl of a substrate may be removed or reduced without damaging the substrate.

According to some embodiments of the present disclosure, a pattern is formed on a tab of an electrode plate to maintain the tab in a flat state, and thus, sagging of the tab may be prevented, and the quality of the tab may be maintained during a transfer process.

According to some embodiments of the present disclosure, a substrate is heated before a pattern is formed, and thus, the pattern may be better formed, and a curl may be effectively removed or reduced

Although the present disclosure has been described above with respect to embodiments thereof, the present disclosure is not limited thereto. Various modifications and variations can be made thereto by those skilled in the art within the scope of the present disclosure and the equivalent scope of the appended claims.

## Claims

1. An electrode plate manufacturing apparatus (10, 900) for a secondary battery, the apparatus (10, 900) comprising:
a supply reel (110) configured to supply a substrate (200, 310), the substrate (200, 310) having a first surface (210) that is uncoated and a second surface (220) that is at least partially coated; and
a patterner (120, 130) adjacent to the supply reel (110), the patterner (120, 130) including a polygon roller (130) and a support roller (120) facing each other, the patterner (120, 130) being configured to pattern the substrate (200, 310) passing between the polygon roller (130) and the support roller (120), and the polygon roller (130) including convex curved portions that extend in an axial direction of the polygon roller (130) and that are arranged in a circumferential direction of the polygon roller (130).

2. The electrode plate manufacturing apparatus (10, 900) as claimed in claim 1, wherein each of the convex curved portions has a continuous gradient.

3. The electrode plate manufacturing apparatus (10, 900) as claimed in claim 1 or 2, wherein:
a cross-section (510) in a direction perpendicular to the axial direction of the polygon roller (130) includes convex portions (610, 620) respectively corresponding to the convex curved portions,
each of the convex portions (610, 620) has a distance, which is greater than or equal to 0.4 mm and less than or equal to 1 mm, between an intersection of a tangent line at a start point of each of the convex portion (610, 620) and a circular arc and an intersection of a tangent line at an end point of each of the convex portion (610, 620) and a circular arc, and
each of the circular arcs is a virtual arc that passes through a midpoint of one convex portion (610) among the convex portions (610, 620) and midpoints of two convex portions (620_1, 620_2) adjacent to the one convex portion (610).

4. The electrode plate manufacturing apparatus (10, 900) as claimed in claim 1, 2 or 3, wherein:
each of the convex curved portions has a first radius of curvature,
the polygon roller (130) further includes concave curved portions alternating with the convex curved portions, each of the concave curved portions having a second radius of curvature, and
the first radius of curvature is less than the second radius of curvature.

5. The electrode plate manufacturing apparatus (10, 900) as claimed in any preceding claim, wherein:
the support roller (120) is positioned on the first surface (210) of the substrate (200, 310) to support the first surface (210) of the substrate (200, 310), and
the polygon roller (130) is positioned on the second surface (220) of the substrate (200, 310) to pressurize the second surface (220) of the substrate (200, 310).

6. The electrode plate manufacturing apparatus (10, 900) as claimed in any preceding claim, wherein the supply reel (110) is configured to supply the substrate (200, 310) such that the first surface (210) of the substrate (200, 310) faces upward and the second surface (220) of the substrate (200, 310) faces downward, and the polygon roller (130) is positioned on a lower side of the substrate (200, 310).

7. The electrode plate manufacturing apparatus (10, 900) as claimed in any preceding claim, further comprising:
a first driver (132) configured to lift and lower the polygon roller (130); and
a controller (100) configured to control the first driver (132) such that the polygon roller (130) pressurizes the substrate (200, 310) at a pressure less than a predetermined pressure.

8. The electrode plate manufacturing apparatus (900) as claimed in any preceding claim, further comprising a heater (910, 920, 930) in front of the patterner (120, 130).

9. The electrode plate manufacturing apparatus (900) as claimed in claim 8, wherein the heater (910, 920, 930) includes a heating roller (930) configured to heat the substrate (200, 310) and at least one guide roller (910, 920) configured to guide the substrate (200, 310) such that the substrate (200, 310) passes through the heating roller (930) by being in close contact with the heating roller (930).

10. The electrode plate manufacturing apparatus (900) as claimed in claim 9, wherein:
the heating roller (930) is positioned on the second surface (220) of the substrate (200, 310) to heat the second surface (220) of the substrate (200, 310), and
the at least one guide roller (910, 920) is positioned on the first surface (210) of the substrate (200, 310) to support the first surface (210) of the substrate (200, 310).

11. The electrode plate manufacturing apparatus (10, 900) as claimed in any preceding claim, wherein the polygon roller (130) has a higher hardness than the support roller (120).

12. The electrode plate manufacturing apparatus (10, 900) as claimed in any preceding claim, wherein the support roller (120) is a sponge roller (120).

13. An electrode plate manufacturing method for a secondary battery, the method comprising:
supplying a substrate (200, 310) having a first surface (210) that is uncoated and a second surface (220) that is at least partially coated; and
forming a pattern on the substrate (200, 310) by passing the substrate (200, 310) between a polygon roller (130), on which a plurality of convex curved portions are formed, and a support roller (120), while pressurizing the substrate (200, 310),
wherein the convex curved portions extend in an axial direction of the polygon roller (130) and are arranged in a circumferential direction of the polygon roller (130).

14. The method as claimed in claim 13, wherein forming the pattern on the substrate (200, 310) includes forming an uneven pattern that extends in a width direction of the substrate (200, 310) to prevent a curl of the substrate (200, 310).

15. The method as claimed in claim 13 or 14, wherein forming the pattern on the substrate (200, 310) includes forming an uneven pattern on a tab (442) extending from the substrate (200, 310) to prevent a curl of the tab (442).

## Amended claims

### Amended claims in accordance with Rule 137(2) EPC.

1. An electrode plate manufacturing apparatus (10, 900) for a secondary battery, the apparatus (10, 900) comprising:
a supply reel (110) configured to supply a substrate (200, 310), the substrate (200, 310) having a first surface (210) that is uncoated and a second surface (220) that is at least partially coated; and
a patterner (120, 130) adjacent to the supply reel (110), the patterner (120, 130) including a polygon roller (130) and a support roller (120) facing each other, the patterner (120, 130) being configured to pattern the substrate (200, 310) passing between the polygon roller (130) and the support roller (120), and the polygon roller (130) including convex curved portions that extend in an axial direction of the polygon roller (130) and that are arranged in a circumferential direction of the polygon roller (130), **characterized in that**:
each of the convex curved portions has a first radius of curvature,
the polygon roller (130) further includes concave curved portions alternating with the convex curved portions, each of the concave curved portions having a second radius of curvature, and
the first radius of curvature is less than the second radius of curvature.

2. The electrode plate manufacturing apparatus (10, 900) as claimed in claim 1, wherein each of the convex curved portions has a continuous gradient.

3. The electrode plate manufacturing apparatus (10, 900) as claimed in claim 1 or 2, wherein:
a cross-section (510) in a direction perpendicular to the axial direction of the polygon roller (130) includes convex portions (610, 620) respectively corresponding to the convex curved portions,
each of the convex portions (610, 620) has a distance, which is greater than or equal to 0.4 mm and less than or equal to 1 mm, between an intersection of a tangent line at a start point of each of the convex portion (610, 620) and a circular arc and an intersection of a tangent line at an end point of each of the convex portion (610, 620) and a circular arc, and
each of the circular arcs is a virtual arc that passes through a midpoint of one convex portion (610) among the convex portions (610, 620) and midpoints of two convex portions (620_1, 620_2) adjacent to the one convex portion (610).

4. The electrode plate manufacturing apparatus (10, 900) as claimed in any preceding claim, wherein:
the support roller (120) is positioned on the first surface (210) of the substrate (200, 310) to support the first surface (210) of the substrate (200, 310), and
the polygon roller (130) is positioned on the second surface (220) of the substrate (200, 310) to pressurize the second surface (220) of the substrate (200, 310).

5. The electrode plate manufacturing apparatus (10, 900) as claimed in any preceding claim, wherein the supply reel (110) is configured to supply the substrate (200, 310) such that the first surface (210) of the substrate (200, 310) faces upward and the second surface (220) of the substrate (200, 310) faces downward, and the polygon roller (130) is positioned on a lower side of the substrate (200, 310).

6. The electrode plate manufacturing apparatus (10, 900) as claimed in any preceding claim, further comprising:
a first driver (132) configured to lift and lower the polygon roller (130); and
a controller (100) configured to control the first driver (132) such that the polygon roller (130) pressurizes the substrate (200, 310) at a pressure less than a predetermined pressure, and optionally wherein the pressure is greater than or equal to 0.5 kgf/cm² and less than or equal to 0.8 kgf/cm².

7. The electrode plate manufacturing apparatus (900) as claimed in any preceding claim, further comprising a heater (910, 920, 930) in front of the patterner (120, 130).

8. The electrode plate manufacturing apparatus (900) as claimed in claim 7, wherein the heater (910, 920, 930) includes a heating roller (930) configured to heat the substrate (200, 310) and at least one guide roller (910, 920) configured to guide the substrate (200, 310) such that the substrate (200, 310) passes through the heating roller (930) by being in close contact with the heating roller (930).

9. The electrode plate manufacturing apparatus (900) as claimed in claim 8, wherein:
the heating roller (930) is positioned on the second surface (220) of the substrate (200, 310) to heat the second surface (220) of the substrate (200, 310), and
the at least one guide roller (910, 920) is positioned on the first surface (210) of the substrate (200, 310) to support the first surface (210) of the substrate (200, 310).

10. The electrode plate manufacturing apparatus (10, 900) as claimed in any preceding claim, wherein the polygon roller (130) has a higher hardness than the support roller (120).

11. The electrode plate manufacturing apparatus (10, 900) as claimed in any preceding claim, wherein the support roller (120) is a sponge roller (120).

12. An electrode plate manufacturing method for a secondary battery, the method comprising:
supplying a substrate (200, 310) having a first surface (210) that is uncoated and a second surface (220) that is at least partially coated; and
forming a pattern on the substrate (200, 310) by passing the substrate (200, 310) between a polygon roller (130), on which a plurality of convex curved portions are formed, and a support roller (120), while pressurizing the substrate (200, 310),
wherein the convex curved portions extend in an axial direction of the polygon roller (130) and are arranged in a circumferential direction of the polygon roller (130), **characterized in that**:
each of the convex curved portions has a first radius of curvature,
the polygon roller (130) further includes concave curved portions alternating with the convex curved portions, each of the concave curved portions having a second radius of curvature, and
the first radius of curvature is less than the second radius of curvature.

13. The method as claimed in claim 12, wherein forming the pattern on the substrate (200, 310) includes forming an uneven pattern that extends in a width direction of the substrate (200, 310) to prevent a curl of the substrate (200, 310).

14. The method as claimed in claim 12 or 13, wherein forming the pattern on the substrate (200, 310) includes forming an uneven pattern on a tab (442) extending from the substrate (200, 310) to prevent a curl of the tab (442).

15. The method as claimed in claim 12, 13 or 14, wherein forming the pattern on the substrate (200, 310) includes pressurizing the substrate at a pressure greater than or equal to 0.5 kgf/cm² and less than or equal to 0.8 kgf/cm².
